# EUROPEAN PATENT APPLICATION

(11) **EP 4 832 412 A1**
(43) Date of publication of application: **28.10.2026**
(21) Application number: 25174905.7
(22) Date of filing: 07.05.2025
(51) Int. Cl.: H04L 9/08, H04W 12/041

(54) **IMPROVED DEVICE-BASED AUTHENTICATION TOOLS**

(30) Priority: 22.04.2025 US 202519186196
(71) Applicant: JPMorgan Chase Bank, N.A., New York, NY 10179 (US)
(72) Inventor: HAMILTON, Gavin, Hoboken (US); ZAHAROVS, Vlad, Glasgow (GB); LAURANCE, David, Ann Arbor (US); KAIPETSKIY, Vladislav, Bandhagen (SE)
(74) Representative: Marks & Clerk LLP

(57) **Abstract**

In accordance with one or more embodiments, one or more apparatus are provided. Memory-held code is provided which is configured to cause, when operatively coupled with one or more processors, an instance of a trusted given user-operated application operated by a given user at a given user device and involving interaction with a secure application and secure data at a remote secure server system. An access key association circuit is provided which is configured to associate both a first key pair and a second key pair to an access key configured to provide a given human user, while operating the given user-operated application, with authenticated access to the secure remote application via a secure access control system.

## Description

### FIELD OF THE DISCLOSURE

Aspects of the present disclosure relate to securing mobile device access to federated remote systems and applications. Other aspects relate to methods for authenticating users and devices accessing a cloud-based secure application.

### BACKGROUND

Individuals, for example, professionals, may use a smart mobile device to access sensitive data (for example, client data) and interact with secure applications. For example, a given finance professional may use their smartphone to carry out various types of financial and banking tasks and transactions, including accessing clients' financial status, managing financial risks, or performing portfolio management. In this and other contexts, also involving highly sensitive activity and data, it is imperative that the interaction over these devices and systems be secure, ensuring proper authentication of both human and device identities throughout sessions of online access. However, current solutions do not allow sufficiently secure, yet practical bring your own device (BYOD) uses of professionals' mobile phones. Rather, the mobile device may be configured especially for the user, and employ a device registration that tightly ties the user to the device for all sensitive access.

### SUMMARY

An objective of the present disclosure is to provide solutions to allow secure BYOD use of mobile devices, for example, smart mobile devices. One or more alternate, or additional objectives may be served by the present disclosure, for example, as may be apparent in the following description.

Embodiments of the disclosure include any apparatus, machine, system, method, articles (e.g., computer-readable media encoded to cause certain acts), or any one or more subparts or sub-combinations of such apparatus (singular or plural), system, method, or article (or encoding thereon or therein), for example, as supported by the present disclosure. Embodiments herein also contemplate that any one or more processes as described herein may be incorporated into a processing circuit as defined herein.

In accordance with one or more embodiments, one or more apparatus are provided. Memory-held code is provided which is configured to cause, when operatively coupled with one or more processors, an instance of a trusted given user-operated application operated by a given user at a given user device. The user-operated application is configured to interact with a secure application and secure data at a remote secure server system. An access key association processing circuit is provided, which is configured to associate both a first key pair and a second key pair to an access key. The access key is configured to provide a given human user, while operating the given user-operated application, with authenticated access to the secure remote application via a secure access control system. The first key pair was generated by a first key pair generator configured to generate a first key pair including a human user cryptographic key pair unique to the given human user. The second key pair was generated by a second key pair generator configured to generate a second key pair including a given device cryptographic key pair unique to the device.

The code configured to cause the instance of the user-operated application may be held at least in part by a memory at a remote server, remote from the given user device. The code may also, or alternatively, be held at least in part by memory at the given user device. The given user-operated application may be instantiated at and run by the given user device.

The given user device may comprise a smart mobile device. The given user-operated application may comprise a secure browser configured to be run at the given device.

The access key association processing circuit may be configured to associate both the first key pair and the second key pair to the access key using a data structure at the remote secure access control system. The access key association circuit may be configured to associate both the first key pair and the second key pair to the access key using a digital signature.

The access key association processing circuit may be configured to bind both the first key pair and the second key pair to the access key. The access key may comprise an application programming interface (API). Per other embodiments, the access key may comprise an API token, or the access key may comprise an access token. In another embodiment, the access key comprises a cookie. In yet another embodiment, the access key comprises a session key.

In accordance with a method, an instance of a trusted given user-operated application is caused to exist. The given user-operated application is operated by a given user at a given user device and involves interaction with a secure application and secure data at a remote secure server system. Both a first key pair and a second key pair are associated to an access key. The access key is configured to provide a given user operating the given user-operated application with authenticated access to the secure remote application via a secure access control system. The first key pair was generated by a first key pair generator configured to generate a first key pair including a given human user cryptographic key pair unique to the given human user. The second key pair was generated by a second key pair generator configured to generate a second key pair including a given device, cryptographic key pair unique to the device.

In accordance with another embodiment, non-transitory computer-readable medium may be provided, encoded to cause providing an instance of a trusted given user-operated application and associating a first key pair and a second key pair to an access key. The application is operated by a given user at a given user device and involves the interaction with a secure application and secure data at a remote secure server system. The key pairs are provided and associated with the access key. The access key is configured to provide a given user, while operating the given user-operated application, with authenticated access to the secure remote application via a secure access control system. The first key pair was generated by a first key pair generator configured to generate a first key pair including a given human user cryptographic key pair unique to the given human user. The second key pair was generated by a second key pair generator configured to generate a second key pair including a given device cryptographic key pair unique to the given device.

Additional features, modes of operations, advantages, and other aspects of various embodiments are described below with reference to the accompanying drawings. It is noted that the present disclosure is not limited to the specific example embodiments described herein. These embodiments are presented for illustrative purposes only. Additional embodiments, or modifications of the embodiments disclosed, will be readily apparent to persons skilled in the relevant art(s) based on the teachings provided.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate only example embodiments of this disclosure and are therefore not to be considered limiting of its scope. For example, the disclosure may admit to other embodiments.
FIG. 1 is a block diagram of an embodiment of a secure online processing system;
FIG. 2 is a sequence diagram of an embodiment of an authentication process that may be employed with the system shown in FIG. 1;
FIG. 3 is a flowchart of an embodiment of processes for device registration, device validation, and device verification;
FIG. 5 is a flowchart of an assertion process;

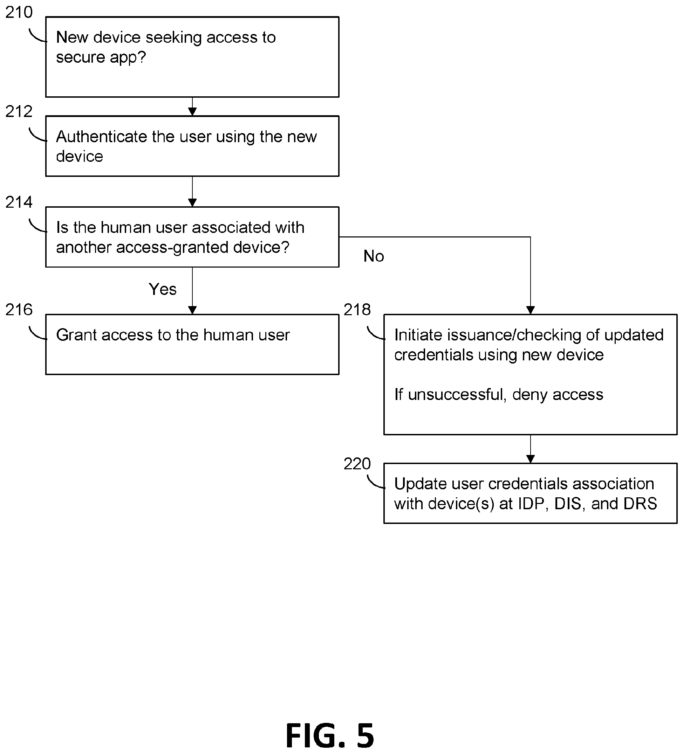

FIG. 5 is a flowchart of a cross-device access process; and

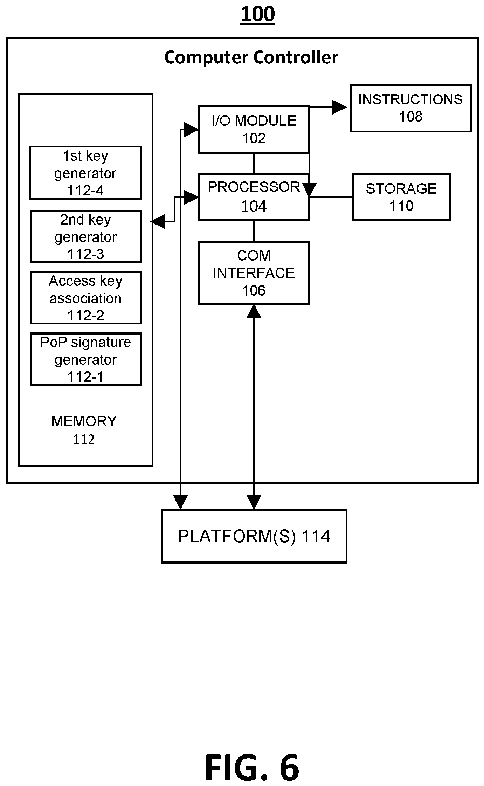

FIG. 6 is a block diagram of an example computer controller.

To facilitate understanding, identical reference numerals may be used to designate identical or like elements in the figures. It is contemplated that elements disclosed in one embodiment may be beneficially utilized in other embodiments without specific recitation.

### DETAILED DESCRIPTION

In the following, reference is made to example embodiments of the disclosure. However, it should be understood that the disclosure is not limited to specifically described embodiments. Instead, any combination of the following features and elements, whether related to different embodiments or not, is contemplated to implement and practice the disclosure. Furthermore, although embodiments of the disclosure may achieve advantages over other possible solutions and/or over the prior art, whether or not a particular advantage is achieved by a given embodiment is not limiting of the disclosure. Thus, the following aspects, features, embodiments, and advantages are merely illustrative and are not considered elements or limitations of the appended claims except where explicitly recited in a claim(s). Likewise, reference to "the disclosure" shall not be construed as a generalization of any inventive subject matter disclosed herein and shall not be considered to be an element or limitation of the appended claims except where explicitly recited in a claim.

In accordance with one or more embodiments herein, various terms may be defined as follows.

Application or application program. An application program is a program that, when executed, performs a task for another program or user, whereas an operating system program, when executed, serves as an interface between an application program and the underlying hardware of a computer. Any one or more of the various acts described below may be carried out by a program, e.g., an application program and/or operating system program.

Processing circuit. A processing circuit (or circuit) may include both (at least a portion of) non-transitory computer-readable media carrying functional encoded data and components of an operable computer. The operable computer is capable of executing (or is already executing) the functionally encoded data and thereby is configured when operable to cause certain acts to occur. A processing circuit may also include: a machine or part of a machine that is specially configured to carry out a process, for example, any process described herein; or a special purpose computer or a part of a special purpose computer.

A processing circuit may also be in the form of a general-purpose computer running a compiled, interpretable, or compilable program (or part of such a program) that is combined with hardware carrying out a process or a set of processes. A processing circuit may further be implemented in the form of an application-specific integrated circuit (ASIC), part of an ASIC, or a group of ASICs. A processing circuit may further include an electronic circuit or part of an electronic circuit. A processing circuit does not exist in the form of code per se, software per se, instructions per se, mental thoughts alone, or processes that are carried out manually by a person without any involvement of a machine.

Program. A program includes software for a processing circuit.

Secure or trusted subsystem or communication link: Per embodiments herein, a processing circuit, device, server, link, or program with secure anti-hack and/or anti-tamper protections, for example, including authentication, encryption, a firewall, and/or prescribed circumstances for operation or access. An embodiment herein involving a processing circuit, device, server, or program that is secure may include one or any combination of these features. A trusted subsystem, device, or application is associated with requisite authentication elements.

User interface tools; user interface elements; output user interface; input user interface; input/output user interface; and graphical user interface tools. User interface tools are human user interface elements that allow human user and machine interaction, whereby a machine communicates to a human (output user interface tools), a human inputs data, a command, or a signal to a machine (input user interface tools), or a machine communicates, to a human, information indicating what the human may input, and the human inputs to the machine (input/output user interface tools).

Graphical user interface tools (graphical tools) include graphical input user interface tools (graphical input tools), graphical output user interface tools (graphical output tools), and/or graphical input/output user interface tools (graphical input/output tools). A graphical input tool is a portion of a graphical screen device (e.g., a display and circuitry driving the display) configured to, via an on-screen interface (e.g., with a touchscreen sensor, with keys of a keypad, a keyboard, etc., and/or with a screen pointer element controllable with a mouse, toggle, or wheel), visually communicate to a user data to be input and to visually and interactively communicate to the user the device's receipt of the input data.

A graphical output tool is a portion of a device configured to, via an on-screen interface, visually communicate to a user information output by a device or application. A graphical input/output tool acts as both a graphical input tool and a graphical output tool. A graphical input and/or output tool may include, for example, screen-displayed icons, buttons, forms, or fields. Each time a user interfaces with a device, program, or system in the present disclosure, the interaction may involve any version of a user interface tool as described above, e.g., which may be a graphical user interface tool. The embodiments herein, including the mobile device, may also involve wearable devices or elements, a neurological system interfacing with a device, human-machine integration, and human-machine hybrid technology.

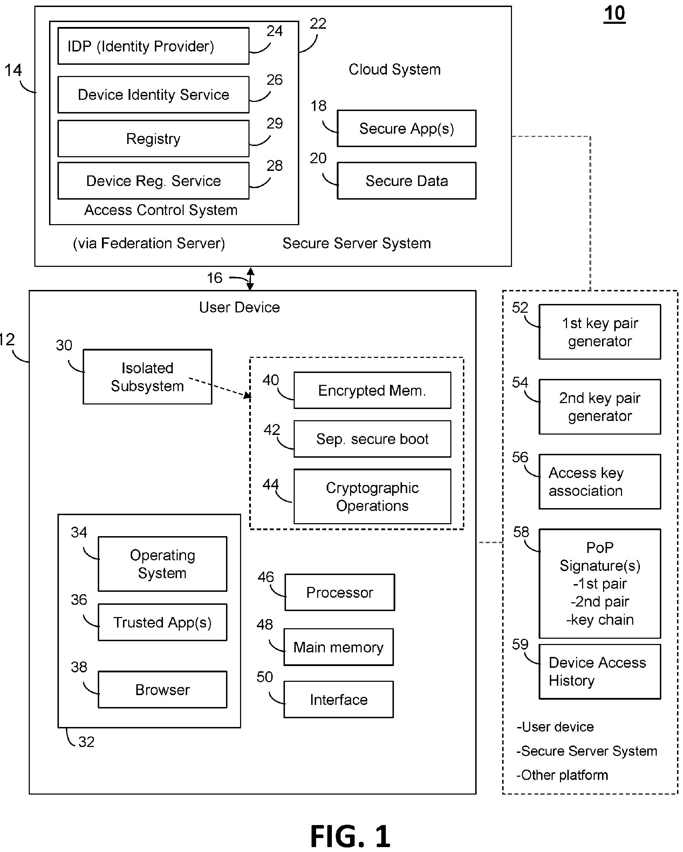

Referring to the drawings in greater detail, FIG. 1 shows a secure online processing system 10. The illustrated system 10 includes a given user device 12 coupled to a secure server system 14 via an online communication network or link 16. In select embodiments, the secure online processing system 10 includes a financial system. Alternatively, system 10 includes an investment and banking transactions system. User device 12 may be a mobile device. More specifically, user device 12 may be a smart mobile device. For other embodiments, by way of example, user device 12 may be a personal digital assistant, a smartphone, or a wearable.

Online communication network or link 16 may include an internetwork (e.g., the Internet) and/or the cloud. Communication network or link 16 may comprise an entity to entity and session-based secure connection (for example, browser to web-accessed server connection, using, for example, Hypertext Transfer Protocol Secure (HTTPS) using SSL/TLS encryption) and/or a virtual private network connection. The illustrated embodiment of secure server system 14 includes an access control system 22, one or more secure applications 18, and secure data 20. Secure server system 14 may be accessed by other devices, such as given user device 12, via a federation server.

In the illustrated embodiment, access control system 22 includes an identity provider (IDP) 24, a device identity service (DIS) 26, a device registration service (DRS) 28, and a registry 29. Secure server system 14 may be provided within a secure financial systems network, or it may be a collective system including a secure financial systems network coupled with cloud provider systems, such as systems provided by Amazon Web Services (AWS), Microsoft Azure, and GCP (the Google Cloud Platform). Per another embodiment, secure server system 14 is a cloud system. In addition, or in the alternative, secure server system 14 comprises one or more virtual machines (VMs).

The user device 12 in the illustrated embodiment includes an isolated subsystem 30, device software 32, a processor 46, a main memory 48, and an interface 50. The illustrated isolated subsystem 30 includes encrypted memory 40, a separate secure boot 42, and a cryptographic operations processing circuit 44.

Processor 46 includes one or more central processing units (CPUs) and/or application specific integrated circuits (ASICs). Software 32 may be contained within main memory 48, and/or may be provided in other types of memory or portions of circuitry, for example, in one or more ASICs. In the embodiment shown, software 32 includes an operating system 34, one or more trusted applications 36, and a browser 38.

Isolated subsystem 30 may include a tamper-resistant secret store. In the embodiment shown, this tamper-resistant secret store is in the form of encrypted memory 40. Various types of isolated subsystems may be employed as isolated system 30. For example, isolated subsystem 30 may include a Secure Enclave system by Apple or a Keystone system by Android. Isolated subsystem 30 may include one or another of a trusted execution environment (TEE), a trusted protected module (TPM), or a secure element (SE).

A trusted execution environment may be software-based and can be a portion of a larger chip or chipset. The trusted execution environment is a segregated area of memory and of the processing circuitry of the device. A trusted protected module would have functionality specified, for example, in accordance with International Organization for Standards (ISO) or Trusted Computing Group (TCG) standards. It may comprise a security chip connected to the host chip through a serial peripheral interface.

A trusted protected module typically includes a dedicated hardware chip that provides a secure environment for sensitive data storage, per one embodiment. By way of example, a trusted protected module in some embodiments may include a standalone chip that is physically isolated from the rest of the system. A secure element is a tamper-resistant secret store, and may comprise, for example, a smart card or subscriber identity module (SIM) card. The secure element prevents illicit access to protected cryptographic information.

A system or application that is secure is a system or application that is hack-resistant. User authentication may involve both confirming that a given user is authorized to access a given information technology (IT) system and ensuring the integrity of what comes from that user. User authentication may further include granting the given user access to the IT system.

Authorization involves deeming a given user as authorized to access an IT system. User authentication involves confirming that a given user, typically human, is who they say they are. The actual identity of the user is the same as the asserted identity of the user. User authentication may further include confirming that the asserted identity of the given user is authorized to access the IT resource. In addition, user authentication includes facilitating and controlling the extent of the given user's access to the IT resource.

Cryptographic systems may involve the use of cryptographic key pairs. Embodiments described herein may be adapted to include the use of symmetric cryptosystems. Symmetric cryptosystems involve one private key that is known to sending and receiving systems, and that private key is used to encrypt and decrypt the message. Embodiments described herein may also be adapted to use reversible public key cryptosystems. A reversible public key cryptosystem involves the ability to operate in both encryption and authentication modes. In the authentication mode, the origin of the message is authenticated, and the system ensures the integrity of the message.

In the authentication mode, the private key is used to encrypt, and the public key is used to decrypt. In an encryption mode, the public key is used to encrypt, and the private key is used to decrypt. The authentication mode involves ensuring that data origin and data integrity are both proper.

The Illustrated user device 12 may include limited coupling between isolated subsystem 30 and processor 46. This may include a limited communication interrupt-driven mailbox and shared memory data buffers.

The separate secure boot 42 of isolated subsystem 30 may, for example, include a united extensible firmware interface (UEFI) secure boot. The cryptographic operations circuit 44 is provided to protect data and carry out key management functions. As an alternative to user device 12, another hardware entity or software entity may be provided for carrying out the execution of an application operated by a given user.

IDP 24 may be an identity provider system that creates, maintains and manages identity information for principles. Per the embodiments illustrated herein, those principles may be human users. While the majority of embodiments herein are configured for use of human user authentication and as a basis for enrollment and human identity proof, an alternate embodiment could involve use of a non-human principal as a basis for creating a device identity for access to the resources using the trusted app on the user device.

Per one embodiment. identity provider 24 may be an open authorization (OAuth) IDP. It may be implemented in accordance with Open ID Connect, which is an identity layer on top of OAuth. Per another embodiment, identity provider 24 may be a security assertion markup language (SAML) identity provider.

Access control system 22 is configured to manage access, for example, to secure applications 18 and/or secure data 20. More specifically, access control system 22 may be configured to carry out authorization management and resource management.

Device identity service (DIS) 26 is configured to verify and manage the device identity and the linked or associated given user who is using the device.

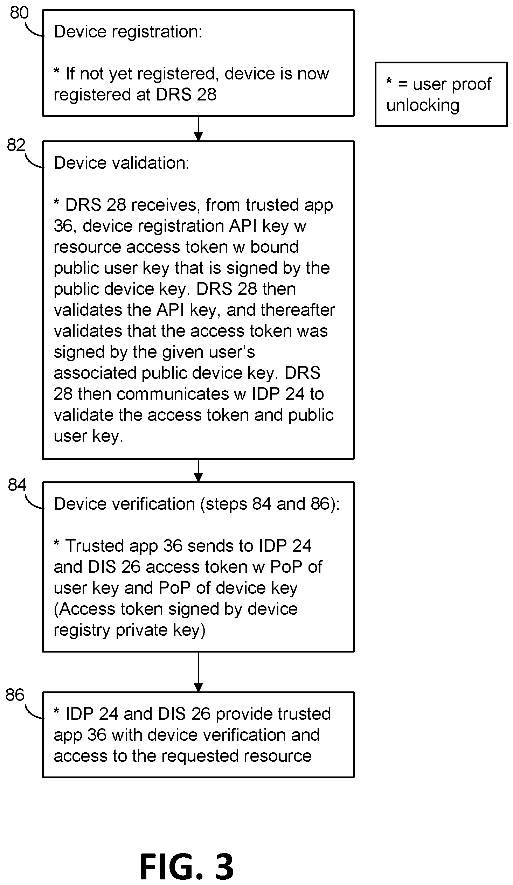

DIS 26 and/or DRS 28 may communicate with a registry 29 configured to hold device identifiers (e.g., universally unique identifiers (UUIDs) and associated public device keys. Registry 29 may be configured to be a server-side secure subsystem (e.g., including a tamper-resistant secret store with encrypted memory), or be a part of such a server-side secure subsystem that generates, manages, and securely holds cryptographic keys related to access to and the integrity of data held by registry 29. For example, the held cryptographic keys may include one or more device registry private keys held by registry 29 and for use to sign access tokens sent by DRS 28 described below for the process illustrated in FIG. 3.

Registry 29 may also store device identity and human user identity associations, and other human user information, such as security identifiers, email addresses, and so on. Per one embodiment, a public device key is registered with registry 29, and associated with the given user ID.

Device registration service (DRS) 28 performs device registrations via, for example, a device registration API accessed by trusted app 36 with a valid device registration API key. In addition to registering a given device, DRS 28 may also perform a device validation. When DRS 28 performs a device validation, per one embodiment, it receives, from trusted app 36, a device registration API key along with a resource token with a bound public user key (e.g., a DPoP key) that is signed by the public device key. It then validates the device registration API key, and thereafter validates that the access token was signed by the given user's associated public device key. DRS 28 then communicates with IDP 24 in order to validate the access token and the public user key (DPoP key). DRS 28 then sends back to trusted app 36 the access token signed by a device registration private key (held and provided by register 29 serving as a server-side tamper-resistant secret store). The signing of the access token by the device registration private key verifies that the device registration for the device and associated given user is complete. In select embodiments, this is performed upon or after performing a verification process as described more fully below. This process may be repeated, for example, when a refresh token, session renewal, and/or biometric update are/is performed.

Per other embodiments, the functionality of IDP 24, DIS 26, DRS 28, and/or registry 29 may be consolidated or distributed in the form of different modular processing circuits that are internal and/or external to access control system 14.

The illustrated system 10 includes a first key pair generator 52, a second key pair generator 54, an access key association processing circuit 56, and a PoP signature processing circuit 58. In addition, a device access history storage 59 may be provided for logging device access events and associated data. The illustrated generators and processing circuits 52, 54, 56, 58, and 59, in the illustrated embodiment, may be processing circuits and/or configured as circuitry and/or software within user device 12. The generation of key pairs by first and second key pair generators 52 and 54 in the illustrated embodiment may be carried out by isolated subsystem 30, for example, by cryptographic operations processing circuit 44. In the illustrated embodiment, access key association circuit 56 is carried out by the trusted application 36 within the software 32 of user device 12.

PoP signature processing circuit 58 may provide PoP signatures as part of processes performed by trusted application 36 in combination with isolated subsystem 30. In one example, embodiment, a PoP signature is employed as follows. When requesting an access token (using a refresh token or an authorization code), the client (trusted app 38 or browser 38) includes a public user key in the header. The authorization server (IDP 24) then returns an access token bound to that key. Usually this is in the form of a claim within the JWT. The client then needs to include a PoP signature with every request, proving that it possesses the private DPoP key.

Per alternate embodiments, one or more of the generators and processing circuits 52, 54, 56, 58, and 59 may be implemented within or as part of secure server system 14, or one or more other platforms (not shown).

First key generator 52 is configured to generate a first key pair, including a given human user cryptographic key pair unique to a given human user using user device 12, to seek access to secure application 18 in secure server system 14 via access control system 22.

The Illustrated system 10 may include one or more private key protectors, comprising one or more secure cryptoprocessors configured to generate and store the first and second key pairs. In the illustrated embodiment, isolated subsystem 30 is provided for this purpose. More specifically, in the illustrated embodiment, first key pair generator 52 is configured to generate a first key pair. In one embodiment, a DPoP key pair is generated, and the public key from that pair is sent to identity provider 24 for subsequent authentication flow. In the generation of the DPoP key pair, the process may be configured to be carried out in accordance with the RFC 9449 OAuth 2.0 Demonstrating Proof of Possession standard, for example, as published September 2023 (ISSN 2070-1721).

Demonstrating proof of possession (DPoP) is a mechanism (an application-level mechanism per one embodiment) for sender constraining access assertions (e.g., OAuth access and refresh tokens). The process may be configured to enable a client to prove possession of a public/private key pair, for example, by including a DPoP communication in an access request (e.g., a header in an HTTPS request). The value of the header may be a JSON (JavaScript Object Notation) web token (JWT) that enables the authorization server (e.g., identity provider 24) to bind issued tokens to the public part of a client's DPoP key. Paired recipients of such tokens are then able to verify the binding of the token to the key pair that the client has demonstrated it holds via the DPoP header. This provides some assurance that the client presenting the token also possesses the private DPoP key. In other words, the legitimate presenter of the token is constrained to be the sender that holds and proves possession of the private part of the key pair.

The embodiments herein can alternatively or in addition employ other methods of sender-constraining tokens that utilize elements of the underlying secure transport layer, such as RFC8705 or token-binding. For example, due to a sub-par user experience of TLS client authentication in user agents and a lack of support for HTTP token binding, neither mechanism can be used if the OAuth client is an application that is dynamically downloaded and executed in a web browser, otherwise referred to as a single-page application. In addition, applications that are installed and run directly on a user's device can benefit from DPoP-bound tokens that guard against the misuse of tokens by a compromised or malicious resource.

A sender-constraining process, whether application-level or at a lower level, is provided with access to (and employs) dedicated, protected storage for cryptic storage of cryptographic keys. DPoP can be used to sender-constrain (user-constrain) access tokens regardless of the client authentication method employed. In the illustrated embodiments, DPoP itself is used for client authentication. DPoP can also be used to sender-constrain refresh tokens issued to public clients.

Second key pair generator 54 is configured to generate a second key pair, including a given device cryptographic key pair unique to the device 12.

Access key association circuit 56 is configured to associate both the first key pair and the second key pair to an access key configured to be used for providing the user with authenticated access, via the given user-operated application, to the secure remote application via secure access control system 22.

The first and second key pairs may be associated with the access key via a data structure per one embodiment, where the data structure is at remote access control system 22. Per another embodiment, the first and second key pairs are associated with the access key with the use of a digital signature. Alternatively, the first and second key pairs may be associated with the access key with the use of an attachment to uniform resource identifier (URI) endpoints. They may be associated with the access key by including them in a message header, for example, in an authorization header of a challenge. They may also be included in a query string.

Per another embodiment, the access key association circuit comprises a binder configured to bind the first key pair and the second key pair to the access key. The access key may be an API key, an API token, or a representational state transfer (REST) API. The access key may also be an access token, a cookie, or a session key. Alternatively, the access key may be an OAuth security token.

The binder may be configured to bind (one or both of) the first and second key pairs to a given access token by causing: (i) first and second key information (public keys or key information) based on the first and second key pairs being provided to the access control system (sent by the client to the access control system during a token request process); and (ii) the access control system associating the given access token with one or both of the first and second key information. The first and/or second key information may be associated with the given access token by embedding or appending information verifying possession of the first and/or second key information in or to the given access token. A hash may be provided for this purpose, where the hash is of all or a portion of cryptographic information based on one or both public keys. The hash may be of the entire public keys. A cryptographic signature may be provided, which based on the public keys, or part of (one or both) the first and second public keys. A cryptographic certificate may also be used.

As described above, the first key pair may include a given user-constrained (given user access-constrained) key pair, which is an application-based key pair. An alternative embodiment includes the use of a mutual transport security layer (mTLS) type of key pair generation. Generating an mTLS key pair may involve creating a public/private key pair, where the public key is embedded within a certificate and used to verify the identity of the user.

Other processes may be employed for generating a cryptographic key pair unique to a given user operating user device 12 to seek access to secure application(s) 18 and secure data 20.

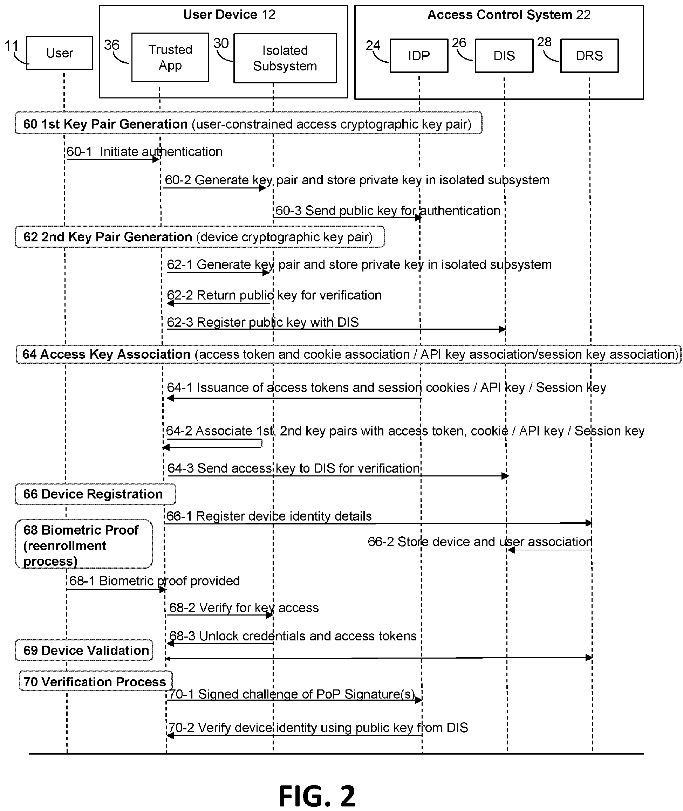

FIG. 2 shows a sequence diagram illustrating the flow of linkage events for establishing a trusted connection between a user 11 operating the user device 12 and obtaining access via the access control system 22. The Illustrated process shown in FIG. 2 includes steps 60, 62, 64, 66, 68, and 70. One or more preceding, intermediate, or other steps may be included that are not shown in FIG. 2. In addition, the steps shown in FIG. 2 may be performed in different orders or may be combined or performed concurrently in an overlapped fashion, as appropriate.

In step 60, a first key pair generation occurs. In step 62, a second key pair generation occurs. In step 64, an access key is associated with the first and second key pairs. In step 66, device 12 and its identity details are registered. In step 68, a biometric proof process is performed. In step 70, a verification process is performed.

More specifically, when a first key pair is generated at step 60, a user-constrained access cryptographic key pair is generated. In an initial substep 60-1, authentication is initiated by the user operating trusted application 36. In substep 60-2, a key pair is generated, and the private key from that pair is stored in the isolated subsystem, such as in isolated subsystem 30, shown in FIG. 1. In substep 60-3, the public key from this pair is sent from isolated subsystem 30 to the identity provider 24 for later authentication flow.

In the process of generating the second key pair at step 62, a device cryptographic key pair is generated. In substep 62-1, the key pair is generated, and the private key is securely stored, for example, at isolated subsystem 30 of user device 12. In substep 62-2, the public key (of the 2nd key pair) is returned from the isolated subsystem 30 to the trusted application 36 for verification. In substep 62-3, the public device key is sent from trusted application 36 to DIS 26 to register the public device key with the device identity service 26.

In the process of the access key association at step 64, at substep 64-1, one or more access tokens and session cookies may be used for later establishing authentication and access for a given user using a trusted application 36 to a secure application 18 and secure data 20. Alternatively, per another embodiment, an API key association approach may be used. As another example, a session key association process may be used. In the embodiment shown, access tokens and session cookies are issued by identity provider 24 to trusted application 36. Per another embodiment, an API key is provided by identity provider 24 to trusted application 36. Per another embodiment, a session key is provided by identity provider 24 to trusted application 36.

At substep 64-2, trusted application 36 associates the first and second key pairs with the access information, for example, the access token and session cookie, the API key, or the session key, depending upon the embodiment. Next, in substep 64-3, the access key is sent from the trusted application 36 to the DIS 26 for verification.

It is noted that, per one or more alternate embodiments, another program (operating system level, middleware, application level, etc.) (e.g., browser 38) may be provided for carrying out one or more of the functions shown in FIG. 2 that are performed by trusted app 36.

In the process of performing device registration at step 66, in substep 66-1, the device is registered with the identity details of the device. This is performed in a communication between trusted application 36 and DRS 28. At substep 66-2, the device and user association information is sent from DRS 28 to DIS 26, and stored at registry 29.

In the process of performing biometric proof at step 68, at substep 68-1, biometric proof is provided, at which point a given user 11 will use a particular type of biometric proof capture approach provided as part of an interface 50 (FIG. 1) of user device 12, or using another mechanism in order to provide the biometric proof to the given user device 12. At substep 68-2, the trusted application 36 communicates with isolated subsystem 30, and isolated subsystem 30 determines that it now has received the necessary biometric verification (verifying the identity of the user) before providing access to certain key and other information. Next, in substep 68-3, the credentials and access tokens are unlocked, and the signature indicating this unlocking is sent from isolated sub system 32 to trusted application 36.

By way of example, per one or more specific embodiments, the unlocked credentials, provided to trusted app 36, include the device UUID, two factor authentication (2FA) proof, the public device key, and a device registration API key.

A device validation process may be performed at step 69, as more fully described herein, for example, below with reference to FIG. 3.

During a later verification process at step 70, in substep 70-1, a signed challenge is sent from trusted application 36 to identity provider 24. This challenge may include, for example, a PoP of a given user private key, or of a chain of keys including the user private key and the device private key. In the alternative, the challenge may include another signed and appropriately identified PoP indicator. This PoP indicator is sent from trusted application 36 to identity provider 24. In response, at substep 70-2, the identity provider 24 verifies the device identity, for example, using a public device key obtained from registry 29.

Per another embodiment, the user device 12 may be pre-registered at an earlier point in or before the process shown in FIG. 2.

The first and second key pairs may be unique to the given user and given user device, and further unique to a particular instance of a trusted application 36. Alternatively, these keys may be configured so that they are valid and usable for the same given human user and given user device combination for other applications provided by a common publisher, that are also accessible by the given user operating given user device 12. Per another embodiment, the keys may be accessible for additional instances and uses of the same trusted application 36, for a trusted group of applications 36 provided on given user device 12, where those applications access secure applications and data 18, 20 on secure server system 14.

Deployment and provisioning of the code on user device 12 may be carried out from the server side, at the secure server system 14. Alternatively, the described functionality may be deployed and provisioned from a secure network that is remote from both the secure server system 14 and the given user device 12. Alternatively, or in addition, aspects of the described solution may be deployed and provisioned, for example, at a cloud system.

User device 12 is described as a mobile device, for example, a smart mobile device. Alternatively, a wearable device may be employed, or the device may include a device-human integration, where a human is able to control through thought processes or other neurological or physical interactions with the device to operate or prompt activity involving operation of trusted application 36, and operate or prompt activation and use of the trusted application 36 or an application via browser 38. The disclosed system also contemplates a human-device hybrid, where a trusted application 36 or browser 38 can access one or more secure applications 18 and secure data 20 from user device 12. Neurological or physical interfacing between a given user device 12 and/or an application may form part of the biometric authentication processes referred to herein.

DIS 26 may include a device identity framework, which is a native mobile library that may be bundled with multiple applications that will perform the user authentication and device identity functions. Identity provider 24 may be specifically configured for human identity authentication. Identity provider 24 may authenticate human users based on provided credentials, issue access and refresh tokens and session cookies, and verify proof of possession, signatures and other proof information provided by the user device 12.

DIS 26 may further maintain a register of device identities linked to given human users, and be configured to verify the identity of a given user device 12. The DRS 28 may be configured to issue one or more access tokens with device identity information that is sent to DRS 28 for inclusion in registry 29. Registry 29 may be configured to provide the device identity details along with a user identifier linking the device to the given user.

Embodiments herein may involve linking of human identity and device identity information cryptographically, while maintaining a complete separation between the human identity provider 24 and both DIS 26 and DRS 28. Alternatively, per another embodiment, access control system 22 may be configured to carry out these steps pertaining to the human and device identities without providing separate services 24, 26 and 28. A PoP indicator may be provided that verifies both the given human user identity and the device identity in a way that links the two without tightly coupling their proof of possession information.

The embodiments herein may be employed to allow for secure authentication for mobile devices, where the user identity and device identity are independently verified, and cryptographically linked to each other. Enhanced session management may be provided for mobile applications, ensuring access tokens and session cookies or other authentication tools come from the same device and provide a protection against session hijacking. The solutions herein may allow for a bring your own device approach, and allow for applications running on such a device to utilize strong multi-factor authentication, using biometrics to secure sensitive cryptographic keys.

FIG. 3 is a flowchart of an example embodiment of aspects of device registration, device validation, and device verification that may be employed, for example, in the authentication process shown in FIG. 2 and by one or more parts of the system shown in FIG. 1. In one example implementation, the acts depicted in FIG. 3 are carried out in the order shown.

The process shown in FIG. 3 includes device registration at step 80, device validation at step 82, and device verification at steps 84 and 86. A prerequisite of each of device registration (step 80), device validation (step 82), and device verification (steps 84 and 86) may involve a renewed proof check (for example, biometric proof) of the presence and identity of the given user being in control of the device, for example, as described above or elsewhere herein. This check may be performed at the start or before each of these stages, and the process is configured to, with the success of such a check, unlock the credentials and the access token(s) at trusted app 36 - or with the failure of such a check, hold or keep locked (or eliminate or expire) the credentials and access token(s).

In step 80 (which may correspond to step 66 in FIG. 2), if the device has not yet been registered, it is now registered at DRS 28.

In step 82 (which may correspond to step 69 in FIG. 2), DRS 28 receives, from the trusted app 36, a device registration API key along with a resource access token with a bound public user key (a DPoP key per the illustrated example embodiment) that is signed by the public device key. DRS 28 then validates the device registration API key, and thereafter validates that the access token was signed by the given user's associated public device key. DRS 28 then communicates with IDP 24 in order to validate the access token and the public user key (DPoP key).

In step 84 (steps 84 and 86, described below, may correspond to step 68 in FIG. 2), trusted app 36 sends, to IDP 24 and DIS 26, an access token with proof of possession of the user key and proof of possession of the device key. This proof of possession may take the form of the access token being signed by a device registry private key.

In step 86, IDP 24 and DIS 26 provide trusted app 36 with device verification and access to the requested resource (e.g., secure app(s) 18 and/or secure data 20).

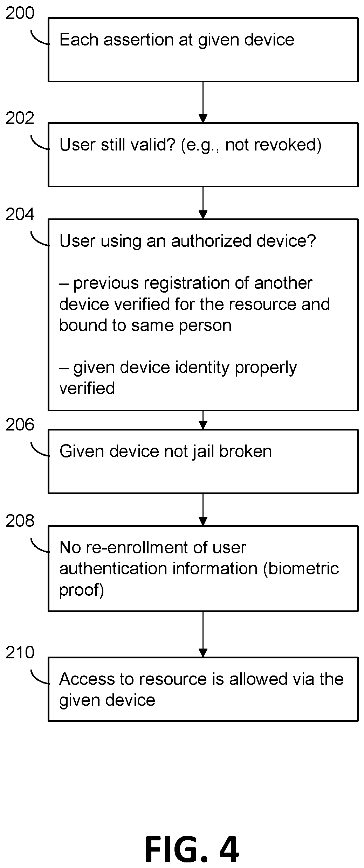

FIG. 4 shows a flowchart of an assertion process that may be employed by access control system 22 of the online processing system 10 in FIG 1. For example, the assertion process may be carried out by IDP 24. In step 200, this indicates that the following steps 202-210 will be performed each time there is an assertion for access to an element along the path to a requested resource, for example, part of access control system 22, secure server system 14, secure app(s) 18, or secure data 20.

For each assertion at step 200, an assertion is sent by trusted app 23 or by browser 38, and received by access control system 22, for example, at IDP 24.

In step 202, a determination is made whether the given user is still valid, for example, involving a determination whether the given user has been revoked. Per one example, the revoking of a given user may be controlled at or via secure server system 14, for example, by an automated or human operated security administration system or program.

In step 204, performed if the user is still valid, a determination is made of whether the user is using an authorized device. This determination may be answered in the affirmative when there was a previous successful registration (and still active) of another device that was verified for the target resource (the same target resource for which access is currently being asserted), and bound to the same given human user. Per one embodiment, reference may be made to registry 29 to confirm that the given human user and the previously registered (different than the given device) were successfully registered for the target resource and that the registration is still valid. A cross-device access process is further described below with reference to FIG. 5.

The user can be determined to be currently using an authorized device also by determining that the current user-controlled device identity (the given device in this process identified at step 200) was properly verified.

If the user is using an authorized device, as determined at step 204, the process proceeds to step 206, where a determination is made whether the given device is jail broken. If the device is not jail broken, the process proceeds to step 208.

In step 208, a determination is made whether there has been any re-enrollment of user authentication information (for example, in the form of new or different biometric proof). If there was no such re-enrollment, the process proceeds to step 210, at which point access to the resource is allowed via the given device. The re-enrollment process may be performed in whole or in part by or at isolated subsystem 30. Alternatively, it may be performed by trusted app 26, or at access control system 22 (e.g., by IDP 26). the re-enrollment process may be part of a user proof process, as shown in FIGs. 2 and 3.

At step 210, access to the targeted resource may be allowed via the given device. Once access is provided, by way of example in operation, an individual may provide the basis of allowing other individuals access to the same resource via the same device. For example, a restaurant manager can authenticate a given device by activating an independent device authentication produced secure device identity that, once registered, allows access by the manager and others given possession of the device, for example, restaurant staff.

FIG. 5 is a flowchart of a cross-device access process, which may be initiated by a given trusted app on a new device seeking access to a resource, such as a secure app 18. The illustrated cross-device access process may prompted or initiated, for example, at step 204 of the process shown in FIG. 4.

In step 210, a determination is made whether a new device is seeking access (not previously registered, validated, and verified for both the currently targeted resource and the current human user), for example, to a secure app 18. If this determination was made in the affirmative, the process proceeds to step 212, which point, there is an authentication of the user using the new device.

In step 214, a determination is made whether the human user now seeking access to the new device is associated with another access-granted device, for example, in the device registration, validation, and verification steps in FIG. 3. If the answer to this determination is no, the process proceeds to step 218. Otherwise, the process proceeds to step 216.

In step 216, access is granted to the human user subject to proper authentication and an assertion process such as that shown in FIG. 4.

In step 218, a process is initiated involving the issuance and checking of updated credentials for use of the device. If this process is unsuccessful, access is denied via the new device. If this credential checking process is successful, the process proceeds to step 220 where the user credentials are updated and then associated with the current new device's identity per processes described above, for example, involving device registration, device validation, and device verification.

FIG. 6 illustrates, in accordance with one or more other exemplary embodiments, a computer controller 100 that may be an application-specific hardware, software, and/or firmware implementation of one or more parts of the system 10 in FIG. 1, described above. The controller 100 may include a processor 104 configured to be executed on one or more, or all of the blocks of the system of FIG. 1, or the functions of the system of FIG. 1 or the process of FIG. 2, described above.

The processor 104 can have a specific structure imparted to the processor 104 by instructions stored in the memory 112 and/or by instructions 108 fetchable by the processor 104 from a storage medium 110. The storage medium 110 can be remote and communicatively coupled to the controller 100.

The controller 100 can be a stand-alone programmable system, or a programmable module included in a larger system. For example, the controller 100 may include or be connected with the secure online processing system 10, for example, via interface 50 . For example, the controller 100 may include one or more hardware and/or software components configured to fetch, decode, execute, store, analyze, distribute, evaluate, and/or categorize information.

The processor 104 may include one or more processing devices or cores (not shown). In some embodiments, the processor 104 may be a plurality of processors, each having one or more cores. The processor 104, in another embodiment, may be a distributed processor. The processor 104 can execute instructions fetched from the memory 112, i.e., with reference to, among other code, instructions or data, one of memory modules 112-1, 112-2, 112-3, or 112-4. Alternatively, the instructions can be fetched from the storage medium 110, or from a remote device connected to the controller 400 via the communication interface 106. Furthermore, the communication interface 106 can also interface with computer systems within a computer system of one or more parts of the system 10. An input/output (I/O) module 102 may be configured for additional communications to or from associated local and/or remote systems of one or more platforms 114 of system 10.

Without loss of generality, the storage medium 110 and/or the memory 112 can include a volatile or non-volatile, magnetic, semiconductor, tape, optical, removable, non-removable, read-only, random-access, or any type of non-transitory computer-readable computer medium. The storage medium 110 and/or the memory 112 may include programs and/or other information usable by processor 104. Furthermore, the storage medium 110 can be configured to log data processed, recorded, or collected during the operation of controller 100.

The data may be time-stamped, location-stamped, cataloged, indexed, encrypted, and/or organized in a variety of ways consistent with data storage practice. The memory modules in memory 112 may represent specialized modules for various functions described in the embodiments herein. By way of example, the memory module 112-1 may represent a specialized module configured to implement aspects of the first key pair generator described above. Similarly, the memory module 112-2 may form a specialized second key pair generator module as described above with reference to FIG. 1, the memory module 112-3 may form a specialized access key association module as described above with reference to FIG. 1, and the memory module 112-4 may form a PoP signature generator module. The instructions embodied in these memory modules can cause the processor 104 to perform certain operations consistent with the functions described above.

Various embodiments herein provide the ability to establish sufficient security when a third device is used to provide remote access to resources, otherwise referred to as a bring your own device use. Embodiments herein do this while separating the management and authentication of device identity and human user identity. For example, per embodiments herein, human user and device identities are kept separate, and features are provided to allow for independent verification of each while also allowing the two to be cryptographically tied together. Human user authentication may be supported in this context, consistent with National Institute of Standards and Technology (NIST) and Financial Industry Ontology (FIBO) standards.

More specifically, the human user identity and device identity are separate in terms of the processing circuits that are used to establish and assert those identities. Per some embodiments, a given human user cryptographic key pair is generated that is unique to a given human user, while a given device cryptographic key pair is generated that is unique to the device. A device identity is configured that is persistent or permanent, based in part on a given human identity that is ephemeral. For example, per some embodiments, the two key pair types are cryptographically tied together. More specifically, a device and given human user based access key is created. The device identity, required for continued access, is persistent or permanent in a secure server system based registry. The device identity in the registry may take the form of a public device key or proof thereof, along with a unique device identifier. The device identity in the registry may also include public human user key or proof of possession thereof. In addition, the registry may include, associated with the device identity, a device registration private key. A device registration private key may serve as proof of possession of the requisite device and human user information in the registry, for purposes of allowing access to the targeted resource, e.g., at step 210 in FIG. 4, at step 86 in FIG. 3, and/or at step 70 in FIG. 2.

Per one embodiment, the secure server based registry is part of and isolated by an isolated subsystem. Per another embodiment, the secure server based registry is part of and isolated by a trusted protected module, which may be a physically isolated tamper-resistant secret store.

The above benefits may be achieved, while allowing a given human user to be associated with a device over time, which supports ongoing verification of the given human user's identity. Moreover, the system provides for session renewal and continuity over time while defending against session hijacking. In addition, consistent identity may be provided over time, to further support a historical view of device hygiene.

Although the disclosure has been described with reference to several exemplary embodiments, it is understood that the words that have been used are words of description and illustration, rather than words of limitation. Changes may be made within the purview of the appended claims, as presently stated and as amended, without departing from the scope and spirit of the present disclosure in its aspects. Although the invention has been described with reference to particular means, materials, and embodiments, the invention is not intended to be limited to the particulars disclosed, rather the invention extends to all functionally equivalent structures, methods, and uses such as are within the scope of the appended claims.

For example, while the computer-readable medium may be described as a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the embodiments disclosed herein.

The computer-readable medium may comprise a non-transitory computer-readable medium or media and/or comprise a transitory computer-readable medium or media. In a particular non-limiting, exemplary embodiment, the computer-readable medium can include a solid-state memory such as a memory card or other package that houses one or more non-volatile read-only memories. Further, the computer-readable medium can be a random-access memory or other volatile re-writable memory. Additionally, the computer-readable medium can include a magneto-optical or optical medium, such as a disk or tapes or other storage device to capture carrier wave signals such as a signal communicated over a transmission medium. Accordingly, the disclosure is considered to include any computer-readable medium or other equivalents and successor media, in which data or instructions may be stored.

Although the present application describes specific embodiments which may be implemented as computer programs or code segments in computer-readable media, it is to be understood that dedicated hardware implementations, such as application specific integrated circuits, programmable logic arrays and other hardware devices, can be constructed to implement one or more of the embodiments described herein. Applications that may include the various embodiments set forth herein may broadly include a variety of electronic and computer systems. Accordingly, the present application may encompass software, firmware, and hardware implementations, or combinations thereof. Nothing in the present application should be interpreted as being implemented or implementable solely with software and not hardware.

Although the present specification describes components and functions that may be implemented in particular embodiments with reference to particular standards and protocols, the disclosure is not limited to such standards and protocols. Such standards are periodically superseded by faster or more efficient equivalents having essentially the same functions. Accordingly, replacement standards and protocols having the same or similar functions are considered equivalents thereof.

The illustrations of the embodiments described herein are intended to provide a general understanding of the various embodiments. The illustrations are not intended to serve as a complete description of all the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The above-disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims, and their equivalents, and shall not be restricted or limited by the foregoing detailed description.

The description herein is provided to enable a person skilled in the art to make or use the disclosure. Various modifications to the disclosure will be apparent to those skilled in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

While the foregoing is directed to embodiments of the present disclosure, other and further embodiments of the disclosure may be devised without departing from the basic scope thereof, and the scope thereof is determined by the claims that follow.

## Claims

1. Apparatus comprising:
memory-held code configured to cause, when operatively coupled with one or more processors, an instance of a trusted given user-operated application operated by a given human user at a given user device and involving interaction with a secure application and secure data at a remote secure server system; and
an access key association circuit configured to associate both a first key pair and a second key pair to an access key configured to provide a given human user, while operating the given user-operated application, with authenticated access to the secure remote application via a secure access control system, wherein the first key pair was generated by a first key pair generator configured to generate a first key pair including a given human user cryptographic key pair unique to the given human user, and wherein the second key pair was generated by a second key pair generator configured to generate a second key pair including a given device cryptographic key pair unique to the device.

2. The apparatus according to claim 1, wherein the code is held at least in part by memory at a remote server remote from the given user device.

3. The apparatus according to claim 1 or 2, wherein the code is held at least in part by memory at the given user device.

4. The apparatus according to any one of the preceding claims, wherein the given user-operated application is instantiated at and run by the given user device.

5. The apparatus according to any one of the preceding claims, wherein the given user device comprises a smart mobile device.

6. The apparatus according to any one of the preceding claims, wherein given user-operated application comprises a secure browser configured to be run at the given device.

7. The apparatus according to any one of the preceding claims, wherein the access key association circuit is configured to associate both the first key pair and the second key pair to the access key using a digital structure or a data structure at the remote secure access control system.

8. The apparatus according to any one of the preceding claims, wherein the access key association circuit is configured to bind both the first key pair and the second key pair to the access key.

9. The apparatus according to any one of the preceding claims, wherein the access key comprises an application programming interface, API, key or token.

10. The apparatus according to any one of the preceding claims, wherein the access key comprises one of an access token, a cookie, or a session key.

11. A computer-implemented method comprising:
causing an instance of a trusted given user-operated application operated by a given user at a given user device and involving interaction with a secure application and secure data at a remote secure server system; and
associating both a first key pair and a second key pair to an access key configured to provide a given human user, while operating the given user-operated application, with authenticated access to the secure remote application via a secure access control system, wherein the first key pair was generated by a first key pair generator configured to generate a first key pair including a given human user cryptographic key pair unique to the given human, and wherein the second key pair was generated by a second key pair generator configured to generate a second key pair including a given device cryptographic key pair unique to the device.

12. The method according to claim 11, wherein the code is held at least in part by memory at a remote server remote from the given user device.

13. The method according to claim 11 or 12, wherein the code is held at least in part by memory at the given user device.

14. The method according to any one of claims 11 to 13 , wherein the given user-operated application is instantiated at and run by the given user device.

15. A non-transitory computer-readable medium comprising computer executable instructions that when executed by one or more computers will cause the one or more computers to perform a method according to any one of claims 11 to 14.
